Europäisches Patentamt

European Patent Office

Office européen des brevets

(11) Publication number: **0 242 093**
**A1**

# EUROPEAN PATENT APPLICATION

(21) Application number: **87302930.0**

(22) Date of filing: **03.04.87**

(51) Int. Cl.⁴: **G11B 20/12 , G11B 20/10**

(30) Priority: **11.04.86 US 851049**

(43) Date of publication of application:
**21.10.87 Bulletin 87/43**

(84) Designated Contracting States:
**DE FR GB IT**

(71) Applicant: **Hewlett-Packard Company**
**Mail Stop 20 B-O 3000 Hanover Street**
**Palo Alto California 94304(US)**

(72) Inventor: **Winters Kel D.**
**5791 Saddle Street**
**Bosie Idaho 83709(US)**
Inventor: **Spenner Bruce F.**
**239 Joe Drive**
**Los Gatos CA 95030(US)**
Inventor: **Bromley David J.**
**160 Redland Road**
**Woodside CA 94062(US)**
Inventor: **Baugh Richard A.**
**490 Gary Court**
**Palo Alto CA 94306(US)**

(74) Representative: **Colgan, Stephen James et al**
**CARPMAELS & RANSFORD 43 Bloomsbury**
**Square**
**London WC1A 2RA.(GB)**

(54) Resynchronization of serial data blocks.

(57) A method and apparatus for re-synchronization of serial data blocks (13,17) utilizing recorded re-synchronizing signals (15a,15b,...,19a,19b,....) separating sub-blocks (13a,13b,...,17a,17b,....) of data is provided. Use of the re-synchronization signals (15a,15b,...,19a,19b,....) in combination with error correction codes allows the recovery of data lost due to a signal drop-out even when clock synchronization is also lost. The optimum re-synchronization mark comprises a unique key (40) having a header (44) of two b bits preceding the key and a trailer (42) of b bits appended to the key where b is the maximum correctable number of bits slipped that the clock can be out of synchronization with the beginning of a data sub-block.

Fig 1

## RESYNCHRONIZATION OF SERIAL DATA BLOCKS

Background of the Invention

The present invention relates generally to digital signal recording systems and, more particularly, to a system having re-synchronizing signals separating blocks of recorded data to maintain precise read clock synchronization with a digital data stream.

One of the significant problems in an information signal recording and reproducing system, such as a helical scan magnetic tape recorder, is the differences between the read and write clocks. It is desirable to have a fixed, continuously running clock for write operations. However, the write clock cannot be utilized to synchronize read operations because the read clock has to be synchronized to the data transitions read off the magnetic tape in order to properly decode the data. Several factors, such as data signal dropout, tape stretching, tape motion, the stability of the rotation of the drive motor and other differences between mechanisms, affect the frequency stability of the data transitions.

Typically in signal recovery circuits a read clock is synchronized and phase-locked to the data transitions recorded on a recording media such as a magnetic disc or tape. This synchronization is effected with a burst of recorded synchronization signals, commonly referred to as a preamble, at the beginning of a data block. In some systems a synchronization signal referred to as a postamble is also included at the end of a data block. If a dropout in the signal occurs, for example, because of a flaw in the recording media, resulting in the temporary loss of the data signal, the read clock will no longer be phase-locked to the data transitions. When the signal returns, the read clock will require re-synchronization with the data signal. Slight speed variations in the system or drift of the clock frequency during the period of time that the read clock was not phase-locked may have caused the data stream to slip with respect to the read clock some integral number of bits or, in the case of a code such as Modified Frequency Modulation (MFM), some integral number of half bits.

The resulting disagreement between expected bit numbers and actual bit numbers prevents successful decoding of the data. Consequently, the data is lost until the read clock is realigned with the data. A single bit slip will cause all subsequent bits to appear in error. Since a block of data is provided with a synchronization signal only at the beginning of the data block, a clock slip of one bit near the beginning of the data block will cause the loss of nearly all of the block of data.

U. S. Patent No. 3,641,534 entitled "Intrarecord Resynchronization in Digital Recording Systems" issued to John W. Irwin on February 8, 1972, and assigned to International Business Machines Corporation, discloses a recording system which records a set of data signals, then records a set of resynchronization signals having predetermined signal phase and frequency-synchronizing and position-indicating components and repeats such recording steps until all data in one block has been recorded.

The intrarecord re-synchronization system designed by Irwin reduces the amount of data lost by providing resynchronization marks between arbitrarily small sub-blocks of data within a block of recorded data; but does not provide for recovery of the data lost. Further, as the size of the sub-blocks decrease, the number of re-synchronization marks increase, and the throughput of the system is decreased.

Summary of the Invention

In accordance with the principles of the present invention, a magnetic tape recording and reproducing apparatus employing error correction and detection capability is provided. The data and error correction bits are recorded in sub-blocks which are separated by short re-synchronization signals. The number of bits in each sub-block is chosen such that the number of bits lost when a sub-block, or a multiple of sub-blocks, is lost is less than the total number of correctable bits provided by the error correction method utilized. In the preferred embodiment a data format utilizing a majority logic decodable highly interleaved error correction code and having re-synchronization or fiducial marks between successive sub-blocks of data provides a method of error correction which reduces the error-rate to an extremely low level. The recorded data bits and error-correction code bits are recorded in blocks comprised of sub-blocks that are lambda bits in length where lambda is the degree of interleave used. After every lambda bit sub-block a unique fiducial mark is inserted. Detection of this unique mark allows a bit counter to be updated thus re-synchronizing the data to a read clock. Thus, if the error correction code corrects t bits in each code word, the interleaved code can correct for the complete loss of any t consecutive sub-blocks. With independent re-synchronization of each sub-block any single loss of signal of length less than or equal to $(t-1) \times$ lambda bits can be corrected, even if clock synchronization is lost.

A fiducial mark consists of a header, a key and a trailer in that order encoded in the same code (such as MFM) as the data. The key is a k bit pattern which identifies the start of the next data sub-block. At an appropriate time near the end of a data sub-block, control circuitry begins searching for the key. When the key is detected, it is then known that the next data sub-block begins a fixed number of bits later. This allows the control circuitry to correct for any slippage between the read clock and the data. A key must be sufficiently long and distinctive enough to be distinguished reliably from any non-key portions of the data stream that the key may be compared with. The key should also be short enough and simple enough to be easily identified when actually encountered by the control circuitry.

## Brief Description of the Drawings

Figure 1 is a simplified block diagram of a video tape recorder for recording and reproducing digital data according to the principles of the present invention.

Figure 2 is a simplified diagrammatic representative of a data track recorded according to the principles of the present invention;

Figure 3 is a diagrammatic representation of a fiducial mark according to the principles of the present invention;

Figure 4 is a diagrammatic representation of a preferred embodiment of a fiducial mark; and

Figure 5 is a diagrammatic representation of another preferred embodiment of a fiducial mark.

## Detailed Description of the Preferred Embodiment

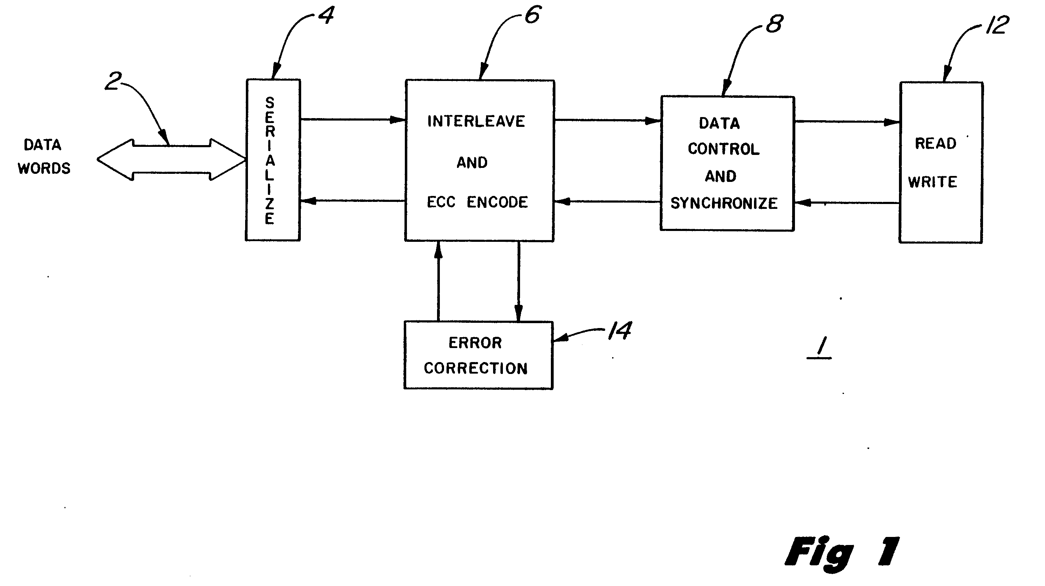

Referring now to Figure 1, a magnetic tape recording and reproducing device 1 including error correction and detection capability is provided. Interface bus 2 provides data words from a host system (not shown) in parallel format to interface circuitry 4 which performs all interfacing functions including converting the input data into serial format. The error correction logic circuit 6 provides the functions of data encoding and decoding for error correction purposes and interleaving of the code words. The coded words are 63 bits in length and comprise 45 bits of data and 18 check bits.

The error correction logic circuit 6 comprises eighteen 912-bit shift registers (not shown) which form a linear feedback shift register which simultaneously performs code word generation and code word interleaving. A majority logic decodable error correction code which combines 45 data bits and 18 check bits into each code word is interleaved to degree 896 (lambda). The error correction code utilized is capable of correcting any three single bits in error in each code word. The error correction logic circuit 6 formats each block of data and error correction code into sub-blocks of lambda bits and appends a string of 16 zeros to each such sub-block to reserve space for a fiducial mark to be added by the data control circuitry 8. The data control circuitry 8 provides data write/head encoding and decoding functions and generates the data track preamble and the fiducial marks.

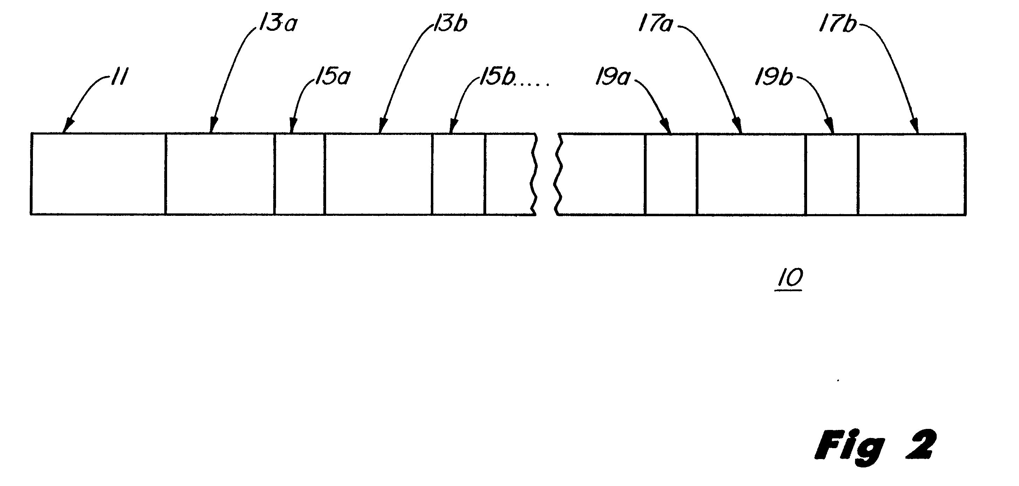

Referring now also to Figure 2, Miller Squared Frequency Modulation encoding is utilized to write the data on tracks 10 on the media (not shown) by the read/write circuitry 12. Two blocks 13 and 17 of data are written on each track 10 in sub-blocks 13a, 13b ..., and 17a, 17b .... In order for the interleaved error correction code to function properly, the data must be synchronized with the read clock. For initial synchronization of each track 10, a highly redundant preamble 11 is generated by the data control circuitry 8. Read synchronization is further ensured by inserting a unique 16-bit fiducial mark 15a, 15b, ..., 19a, 19b, ..., after each sub-block 13a, 13b, ..., 17a, 17b, ..., as shown in Figure 2. Since two blocks 13, 17 of data are recorded on each track 10, fiducial mark 19a which separates the two data blocks 13, 17 precedes the first data sub-block 17a in the second block 17.

During a read operation the detection of the fiducial marks 15a, 15b, ..., 19a, 19b, ..., by the read/write circuitry 12 updates a bit counter (not shown) which allows the data control circuitry 8 to re-synchronize the read clock with the data stream if any bit slip has occurred. Decoded data is coupled to the error correction logic circuitry 6 for de-interleaving and error detection. Any errors detected are corrected by error correction circuitry 14. Since the error correction code is capable of correcting any three random bits in each 63 bit code word, the interleaved code allows the original data to be recovered as long as any burst error is confined to less than three sub-blocks (2688 bits). Even if clock synchronization is lost, any signal dropout of length 2 lambda (1792) bits or less can be corrected.

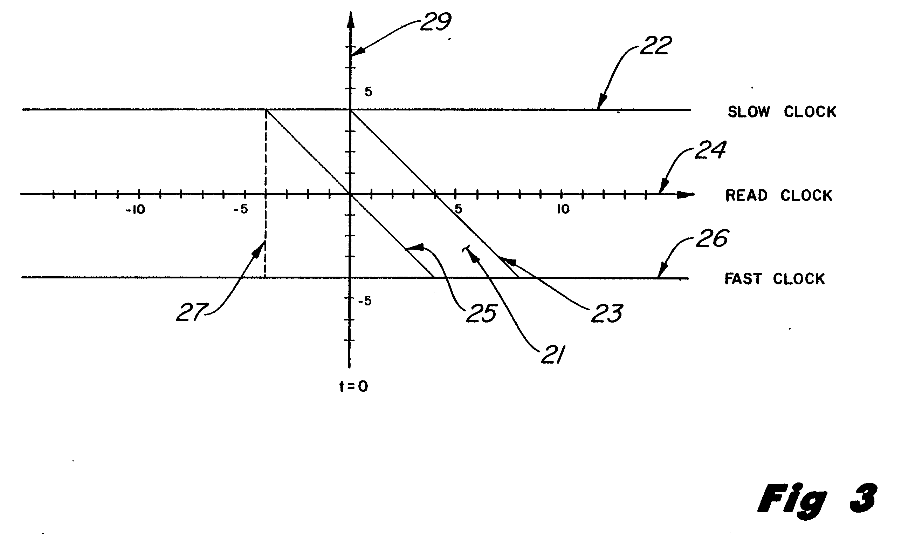

The re-synchronization system is designed to correct for some maximum amount of bit slip, b, which will reduce the error rate to an acceptable level. The 16-bit fiducial mark utilized in the preferred embodiment allows re-synchronization after bit slips of up to + or - 4 bits. The fiducial mark is comprised of an eight-bit header, a four-bit key and a four-bit trailer, in that order. Referring now to Figure 3, the key 21 is a k bit pattern which identifies the start of the following data sub-block; for example, fiducial mark 15a will identify the start of data sub-block 13b (as shown in Figure 2). At an appropriate time near the end of a data sub-block, control circuitry 12 (as shown in Figure 1) will begin looking for the key 21. When key 21 is detected, it is known that the data begins a fixed number of bits after the trailing edge 23, thus allowing the control circuitry 12 to correct for any slippage between the read clock and the data.

Referring now to Figures 3, 4 and 5, the horizontal axis 24 measures time on the read clock. The vertical axis 29 measures the number of bits missed by the read clock. Horizontal lines 22 and 26 represent a read clock that is slow or fast, respectively, by the maximum correctable amount for the preferred embodiment. Figure 3 illustrates the actual appearance of a key 21 (defined by slanted lines 23 and 25) with the key length k, equal to four bits with the maximum correctable bit slip, b, equal to four bits. The fiducial mark will correct for + or - b bits missed. If the read clock 24 and the data agree, the trailing edge 23 of the key 21 is detected at t = 4. If the read clock runs slow (22) during a data dropout and misses b bits of data, the trailing edge 23 is detected early by b bits. Similarly, if the read clock runs fast (26) during a data dropout and assumes an extra b bits have passed, the trailing edge 23 will be detected late by b bits.

To detect the key 21 when the read clock has run slow (22) by the maximum correctable amount, the control circuitry 12 must begin searching for the key 21 b bits (as shown by dashed line 27) prior to the anticipated start (t = 0) of the key 21 (anticipated assuming that the read clock 24 and the data are synchronized). Beginning the search any earlier than b bits prior (27) to the anticipated start (29) of the key 21 increases the probability of incorrectly identifying a key in the data. "Beginning the search" at some time t means collecting the next k bits and comparing the collected bits with the key 21. This is most effectively done by passing the data through a k bit shift register.

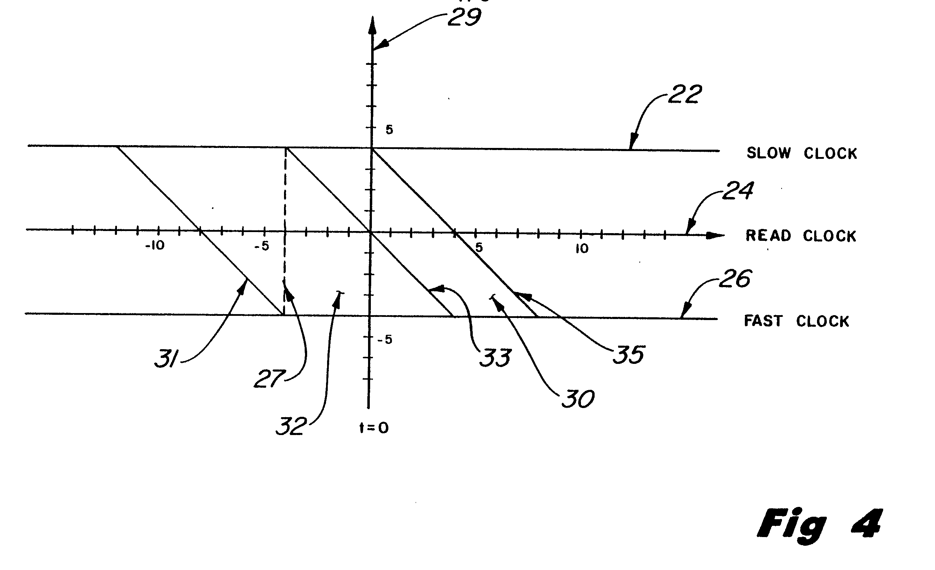

Referring now specifically to Figure 4, to minimize inadvertent identification of a non-key portion of the data as a key, a disallowed pattern of the data channel code may be used. A more reliable solution is to add a header 32 (defined by slanting lines 31 and 33) of known content, such as a string of zeros, between the end of the data and the start 33 of the key 30. The maximum useful length of the header 32 is 2 b bits. Since the search for the key 30 begins b bits (27) prior to the anticipated start 29 of the key 30 this search will always be in the header 32, even when the start 33 of the key 30 appears b bits late due to a fast clock 26 during a data dropout.

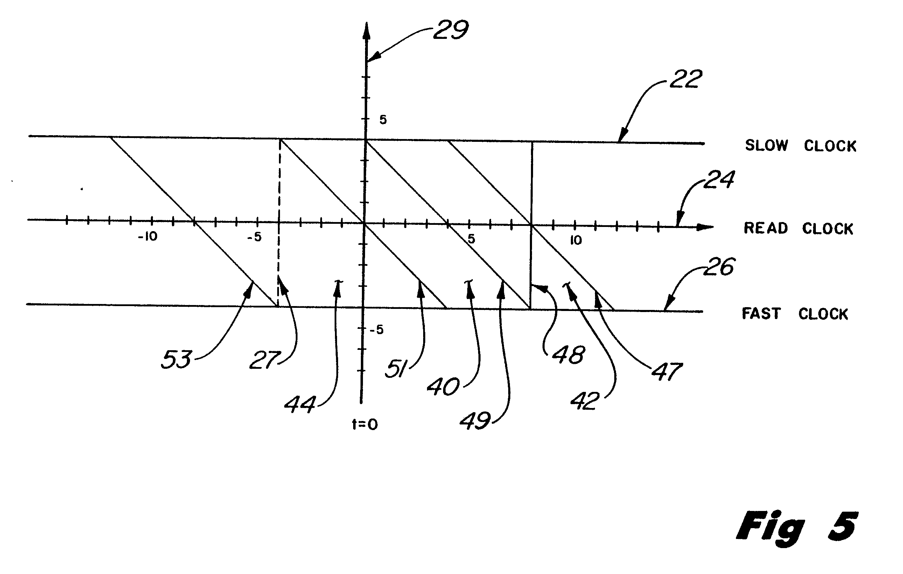

Referring now specifically to Figure 5, if no key is detected, the control circuitry 12 (as shown in Figure 1) will anticipate the start of the next data sub-block based on the read clock 24. A trailer 42 of length b bits must be appended to key 40 to delay the default (i. e., no key detected) start 48 of the next data sub-block. This provides adequate search time to detect the key 40 when bit slip has occurred due to a fast clock 26 and the key 40 appears late.

The optimal fiducial mark size is thus k + 3b bits. This allows for a header 44 of 2b bits prior to the start 51 of the key 40 and a trailer 42 of b bits after the end 49 of the key 40. The key search begins b bits prior to the anticipated start 29 of key 40. The key 40 bit pattern should be chosen to provide maximum orthogonality with the 2b non-key bit patterns that are part header 44 and part key 40.

Having described a specific preferred embodiment of the present invention with reference to the accompanying drawings, it is to be understood that the invention is not limited to the precise embodiment described, and that various changes and modifications may be affected therein by one skilled in the art without departing from the scope or spirit of the invention as defined in the appended claims.

**Claims**

1. Electronic apparatus, such as a videotape recorder or the like utilizing a data error correction code, for recording and reproducing data information words, said electronic apparatus comprising:

coding means (6) for coding and forming a block (13, 17) of a plurality of said data information words,

first means (6) for forming and adding a plurality of error check bits to each of said data information words,

second means (6) for forming each of said data information words and error check bits in said block (13,17) into a plurality of sub-blocks (13a,13b,...,17a,17b,....), each of said sub-blocks (13a,13b,...,17a,17b,....) having a predetermined number of bits, said predetermined number of bits being no greater than the number of bits correctable by said error correction code,

characterized by

third means (8) for forming a re-synchronization word (15a,15b,...,19a,19b,....) having a predetermined number of bits arranged in a recognizable unique bit pattern, said re-synchronization word (15a,15b,...,19a,19b,....) indicative of the position of the beginning of a sub-block (13a,13b,...,17a,17b,....),

recording means (12) for recording one of said plural ity of sub-blocks (13a,13b,...,17a,17b,....), then recording said re-synchronization word (15a,15b,...,19a,19b,....) and repeating such recording steps until all of said data information words and error check bits in said block (13,17) are recorded,

reading means (12) for reading said recorded block (13,17) of data information words and error check bits,

detecting means (12) for detecting said re-synchronization word (15a,15b,...,19a,19b,.....),

means (8) responsive to said detected re-synchronization word (15a,15b,...,19a,19b,.....) for synchronizing a read clock with said beginning of the succeeding sub-block (13a,13b,...,17a,17b,.....), and

decoding means (6) for decoding said plurality of sub-blocks (13a,13b,...,17a,17b,.....), said means (6) for decoding responsive to said plurality of error check bits for error detection and correction in said information words.

2. Electronic apparatus according to claim 1 characterized in that said second means (6) comprises means for interleaving each of said data information words and error check bits in said block (13,17) into a plurality of interleaved sub-blocks (13a,13b,...,17a,17b,.....), each of said interleaved sub-blocks (13a,13b,...,17a,17b,.....) having no more than lambda bits where lambda is the degree of interleaving.

3. Electronic apparatus according to Claim 1 or 2 characterized in that said resynchronization word (15a,15b,...,19a,19b,.....) includes a predetermined number of bits arranged in a first recognizable bit pattern (44) preceding said unique bit pattern and a second recognizable bit pattern (42) following said unique bit pattern.

4. Electronic apparatus according to claim 3 characterized in that said first recognizable bit pattern (44) is 2 b bits in length and said second recognizable bit pattern (42) is b bits in length where b is the maximum correctable number of bits that said read clock may be out of synchronization with the beginning of the succeeding sub-block.

5. A method of re-synchronizing a read clock with the beginning of a data sub-block recorded in a suitable media, said method comprising the steps of:

formatting a data stream in blocks (13,17) of a plurality of said data sub-blocks (13a,13b,...,17a,17b,.....), having a predetermined number of bits,

characterized by the steps of

forming a re-synchronization signal (15a,15b,...,19a,19b,.....) having a predetermined number of bits arranged in a recognizable unique bit pattern, indicative of the position of the beginning of said data sub-blocks (13a,13b,...., 17a, 17b, ....),

recording one of said plurality of data sub-blocks (13a,13b,...,17a,17b,.....) and then recording said re-synchronization signal (15a,15b,...,19a,19b,.....) and repeating such recording steps until all of said plurality of data sub-blocks (13a,13b,...,17a,17b,.....) in each block (13,17) are recorded,

detecting said re-synchronization signal, and

synchronizing said read clock with the beginning of the next succeeding data sub-block (13a,13b,...,17a,17b,.....) in response to said detected re-synchronization signal.

6. The method according to claim 5 characterized in that said step of detecting said re-synchronization signal (15a,15b,...,19a,19b,.....) includes beginning a search for said re-synchronization signal (15a,15b,...,19a,19b,.....) b bits prior to the anticipated beginning of said re-synchronization signal where b is the maximum correctable number of bits that said read clock may be out of synchronization with said beginning of the next succeeding data sub-block.

7. The method according to claim 5 or 6 characterized in that said re-synchronization signal (15a,15b,...,19a,19b,.....) includes a predetermined number of bits arranged in a first recognizable bit pattern (44) preceding said unique bit pattern and in a second recognizable bit pattern (42) following said unique bit pattern.

8. The method according to claim 7 characterized in that said first recognizable bit pattern (44) is 2 b bits in length and said second recognizable bit pattern (42) is b bits in length.

**Fig 1**

11  13a  15a  13b  15b.....  19a  17a  19b  17b

10

*Fig 2*

0 242 093

*Fig 3*

0 242 093

**Fig 4**

0 242 093

Fig 5

0 242 093

## DOCUMENTS CONSIDERED TO BE RELEVANT

EP 87302930.0

| Category | Citation of document with indication, where appropriate, of relevant passages | Relevant to claim | CLASSIFICATION OF THE APPLICATION (Int. Cl.4) |
|---|---|---|---|
| A | EP - A2 - 0 164 746 (MATSUSHITA) <br> * Fig. 1; abstract; claims 1-6 * | 1 | G 11 B 20/12 <br> G 11 B 20/10 |
| A | EP - A1 - 0 133 790 (SONY) <br> * Fig. 3A-3D; abstract * | 1 | |
| A | EP - A1 - 0 166 785 (SONY) <br> * Fig. 1; abstract; claims 1-3 * | 1 | |
| D,A | US - A - 3 641 534 (IRWIN) <br> * Abstract; fig. 1 * | 1 | |

TECHNICAL FIELDS SEARCHED (Int. Cl.4)

G 11 B 5/00

G 11 B 20/00

The present search report has been drawn up for all claims

| Place of search | Date of completion of the search | Examiner |
|---|---|---|
| VIENNA | 10-07-1987 | BERGER |